# NEUE EUROPÄISCHE PATENTSCHRIFT

(11) **EP 1 464 533 B2**
(45) Veröffentlichungstag und Bekanntmachung des Hinweises auf die Entscheidung über den Einspruch: **29.02.2012**
(45) Hinweis auf die Patenterteilung: 07.06.2006
(21) Anmeldenummer: 03007403.3
(22) Anmeldetag: 02.04.2003
(51) Int. Cl.: B60N 2/56

(54) **Kraftfahrzeugsitz und Gebläsemodul für einen solchen Kraftfahrzeugsitz**
Motor vehicle seat and blower for such a motor vehicle seat
Siège de véhicule automobile et souffleur pour un tel siège de véhicule automobile

(43) Veröffentlichungstag der Anmeldung: 06.10.2004
(60) Teilanmeldung: 04001472.2
(73) Patentinhaber: Catem GmbH & Co.KG, 76863 Herxheim bei Landau/Pfalz (DE)
(72) Erfinder: Bohlender, Franz, 76870 Kandel (DE); Mann, Gerald, 76149 Karlsruhe (DE); Zeyen, Michael, 76819 Landau/Queichheim (DE)
(74) Vertreter: Grünecker, Kinkeldey, Stockmair & Schwanhäusser

(56) Entgegenhaltungen:
- WO-A-03/011633
- DE-A- 10 037 065
- DE-A- 10 056 045
- DE-A- 19 931 193
- DE-U- 29 901 225
- US-A1- 2002 003 362
- US-A1- 2002 003 363
- US-B1- 6 291 803

## Beschreibung

Die Erfindung bezieht sich auf einen Kraftfahrzeugsitz nach dem Oberbegriff des Anspruchs 1.

Um den Komfort in einem Kraftfahrzeug zu erhöhen, zählen beheizte und belüftete Sitze bereits zum Standard. Die Sitzbeheizung und die Sitzbelüftung sind jedoch üblicherweise voneinander getrennte Systeme. Der Aufwand an Montage durch die notwendige elektrische Verkabelung und die Anzahl von Bauteilen ist sehr groß. Ein erheblicher Aufwand ist auch erforderlich, wenn die seitlichen Wangen beheizt oder belüftet werden sollen. Die Beheizung durch einen in Schlaufen gelegten Heizdraht oder in Form eines Folienheizelementes vermittelt eine punktuelle nicht homogene Wärmeübertragung. Insbesondere bei Heizdrähten besteht auch die Gefahr von "hot spots", d.h. beheizten Stellen mit geringer Wärmeabfuhr.

US 2002/0003362 beschreibt einen belüfteten Kraftfahrzeugsitz, bei dem die Luft über einzelne .Ventilatoren von unten in die Sitzfläche oder von hinten in die Rückenlehne eingeblasen und über eine ihn den Sitz integrierte luftleitende Schicht aus einem Gewirke verteilt wird, um über eine luftdurchlässige obere Schaumstoffschicht großflächig auszutreten. Als gattungsbildender Stand der Technik wird die DE 100 37 065 angesehen.

Ein wesentliches Problem der Hersteller von Kraftfahrzeugen besteht darin, dass aufwendiger Komfort teuer ist und deshalb nur als Sonderausstattung angeboten werden kann, weil er bei den damit verbundenen Kosten nicht von allen Kunden gewünscht wird. Sonderausstattungen führen aber beim Kraftfahrzeughersteller zu logistischen Problemen und Problemen in der Lagerhaltung, was sich wiederum auf die Kosten auswirkt.

Ein mit hohem Komfort beheizter Kraftfahrzeugsitz kann wegen der damit verbundenen Kosten nur noch als Sonderausstattung angeboten werden. Um die angesprochenen Probleme beim Hersteller von Kraftfahrzeugen zu minimieren geht die vorliegende Erfindung deshalb von folgendem Ansatz aus:

Es wird ein "Einheitssitz" angeboten, in dem ohne wesentlichen Zusatzaufwand bereits alle Vorkehrungen getroffen sind, um ohne Aufwand eine "Komfortheizung" " nachzurüsten, indem alle dafür erforderlichen Komponenten, mit Ausnahme der teurein Aggregate schon vorgesehen sind. Bei Bedarf kann dann der Kraftfahrzeugsitz einfach nachgerüstet werden.

Bei einem Kraftfahrzeugsitz nach dem Anspruch 1, in den bereits ein für die Luftführung und -verteilung eingearbeitetes Gewirke integriert ist, hat sich herausgestellt, dass dieses Gewirke auch ohne ein eingesetztes Gebläsemodul und auch im Sommerbetrieb, also ohne Beheizung, vorteilhaft ist, weil es einen Luftaustausch zwischen den Oberflächenabschnitten gestattet und sich die beim Sitzen entstehende Feuchtigkeit verteilt und nach außen abgeführt wird. Es bedeutet für den Hersteller des Kraftfahrzeugs praktisch keinen Mehraufwand, den Kraftfahrzeugsitz für die "Komfortheizung" vorzubereiten, um sie im Bedarfsfall nachzurüsten.

Es ist nicht unproblematisch ein Gebläsemodul mit einer Heizleistung von ca. 300 Watt so zu bauen, dass es sich zum Nachrüsten in einem "Einheitssitz" eignet. Verständlicherweise kann man es dem Käufer, der nicht an der "Komfortheizung" interessiert ist, nicht zumuten, einen Kraftfahrzeugsitz zu akzeptieren, der optisch schon signalisiert, dass er sich eine solche Sonderausstattung nicht geleistet hat. Der Einheitssitz muss deshalb so gestaltet sein, dass er einerseits ohne Komfortheizung akzeptierbar, durch die Anpassung an den Gebläsemodul keine nennenswerten Mehrkosten verursacht, und dennoch eine einfache Nachrüstung zulässt. Mit dem Kraftfahrzeugsitz nach Anspruch 1 erscheinen alle diese Forderungen erfüllt.

Das Gebläsemodul des Kraftfahrzeugsitzes nach Anspruch 2 ist an die obigen Bedürfnisse angepasst, indem es eine Bauform aufweist, die eine geringe Bauhöhe aufweist, bedingt durch das Radialgebläse und die in einer Ebene angeordneten weiteren Komponenten.

Anhand eines in der Zeichnung dargestellten Ausführungsbeispiels wird die Erfindung näher erläutert. Es zeigen:

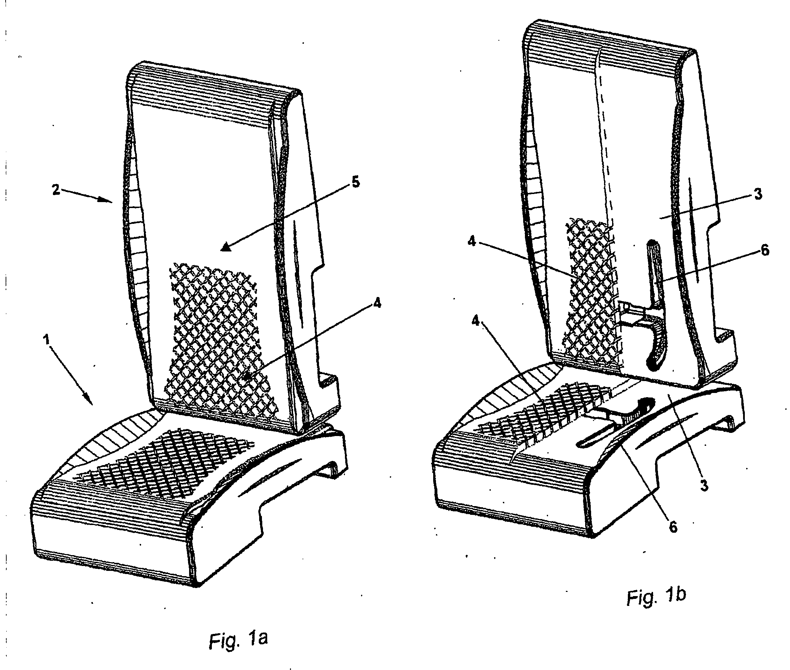

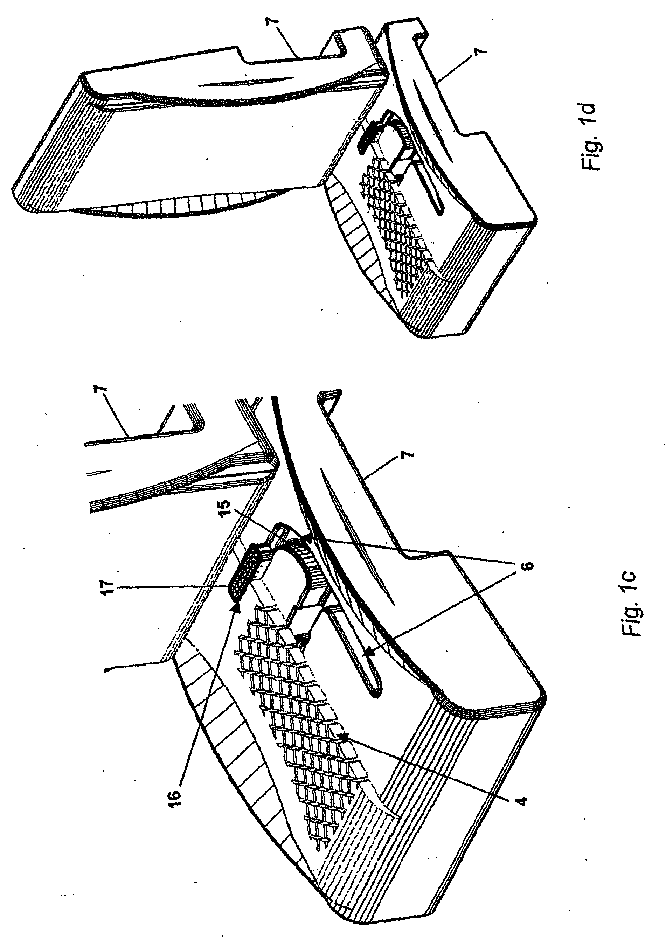

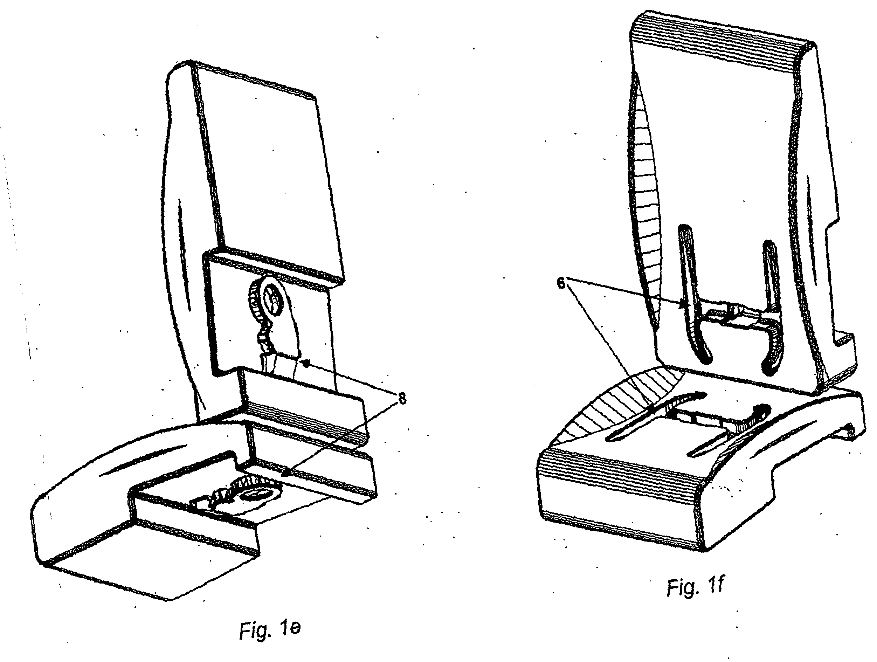

- FIG. 1: (1a bis 1f) den Kraftfahrzeugsitz in unterschiedlichen Ansichten,
- FIG. 2: die Zellenstruktur des Gewirkes in Detailansicht,
- FIG. 3: das Gebläsemodul mit abgenommenem Deckel.

Der Kraftfahrzeugsitz weist in üblicher Form ein Sitzpolsterteil 1 und eine Rückenlehne 2 auf. Sowohl das Sitzpolsterteil 1, als auch die Rückenlehne 2 bestehen im wesentlichen aus einem Stützkörper 3 aus Hartschaumstoff, beispielsweise Polyurethan. Auf die Oberfläche des Hartschaumstoffs ist ein Gewirke 4 aufgeklebt auf dem der äußere Bezug 5, beispielsweise Velour oder Leder liegt.

In den Hartschaumstoff sind Luftströmungskanäle 6 vorgesehen, die in einer Kammer 7 münden und auf ihren gesamten Längen zu dem Gewirke 4 hin offen sind.

Zwischen der Kammer 7 dem Luftaustrittskanal des Gebläsemoduls ist eine elastische Abdichtung 14 vorgesehen, um die Übertragung von Vibrationen zu verhindern. Das Gewirke 4 hat eine Stärke von etwa 1 cm und besteht aus einzelnen wabenförmigen Zellen von jeweils etwa 1 qcm. Die Zellen sind untereinander über Fasern verbunden, die sich unter Belastung nicht vollständig zusammendrücken lassen , so dass sich in die Kammer 7 eingeblasene Luft über die gesamte Fläche des Gewirkes 4 verteilt und gleichmäßig an allen Stellen des Bezugs 5 austreten kann.

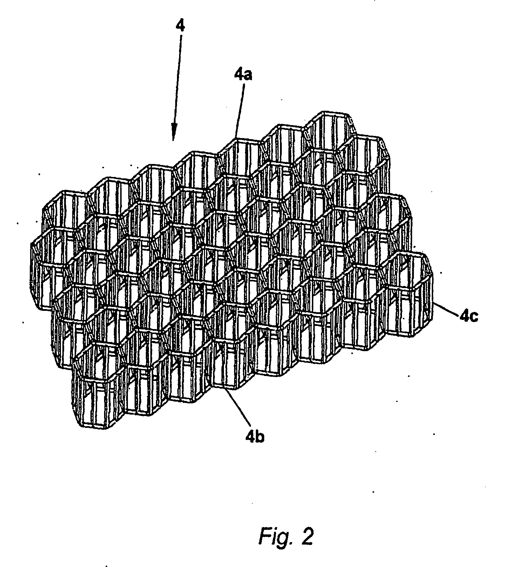

Das in FIG. 2 näher dargestellte Gewirke 4 besteht z.B. aus einem wabenförmigen Nylongeflecht mit einer Grundschicht 4a und einer Deckschicht 4b und einer Vielzahl von Abstandshaltern 4c zwischen diesen Schichten 4a, 4b. Grund- und Deckschicht 4a, 4b weisen an ihren Kanten miteinander verbundene Zellen von etwa 60 qmm auf. Sie sind gebildet durch einen aus etwa 20 Einzelfäden gebildeten Zwirn, der einen Durchmesser von etwa 0,05 mm aufweist. Zumindest an den Eckpunkten sind die Zellen der sich gegenüberliegenden Schichten 4a, 4b durch Abstandshalter 4c aus demselben Material miteinander verbunden und im unbelasteten Zustand auf einem Abstand von etwa 1 cm gehalten. Die Abstandshalter 4c sind vorzugsweise bogenförmig ausgebildet, um dem Gewirke 4 eine vorgegebene Elastizität zu verleihen. Wünschenswert ist eine Elastizität oder Nachgiebigkeit, die bei einem anfänglichen Flächendruck von 0 bis etwa 20 g/qcm praktisch noch zu keinen Verformungen führt und dann bei einem ansteigenden Flächendruck bis zu 100 g/qcm zu einer annähernd linearen Annäherung der beiden Schichten 4a, 4b führt, aber auch bei maximaler Flächenbelastung immer noch einen Luftaustausch zwischen den beiden Schichten ermöglicht.

Damit sich die von dem Gebläsemodul 8 eingeblasene Luft (Warm- oder Kaltluft) möglichst gleichmäßig auch in die den Luftströmungskanälen 6 entfernten Bereiche verteilt, muss dafür gesorgt sein, dass der Strömungswiderstand pro Fläche des O-berflächenbezugs 5 deutlich größer ist, als derjenige des Gewirkes 4. Bei einem Oberflächenbezug aus Leder sind in dem Leder eine Vielzahl von Durchgangsöffnungen im gegenseitigen Abstand von etwa 4 mm und einem Durchmesser von etwa 1 mm vorgesehen.

In dem dargestellten Ausführungsbeispiel ist sowohl das Sitzpolsterteil 1, als auch das Rückenteil 2 mit einem Gebläsemodul 8 versehen, die jeweils in einer Kammer 9 bzw. Ausnehmung im unteren Teil des Sitzpolsterteils 1 bzw. dem hinteren Teil der Rückenlehne 2 vorgesehen sind. Sowohl mit, als auch ohne eingesetzten Gebläsemodul 8 wird die Kammer 9 durch einen nicht näher dargestellten Deckel verschlossen, der die notwendigen Aussparungen für den Gebläsemodul 8 aufweist und außen bündig mit der Sitzkontur abschließt, und lediglich eine oder mehrere, vorzugsweise seitlich angeordnete Luftansaugöffnungen aufweist, die über entsprechende Kanäle zum Gebläsemodul 8 führen.

Das Sitzpolsterteil 1 ist im Eckbereich zur Rückenlehne 2 mit einem kastenförmigen Ausströmer 16 versehen, um an dieser Stelle wahlweise zusätzlich Luft austreten zu lassen. Der Ausströmer 16 ist eingangsseitig mit dem Luftströmungskanal 6 verbunden und ausgangsseitig mit einem Gitter 17 abgeschlossen.

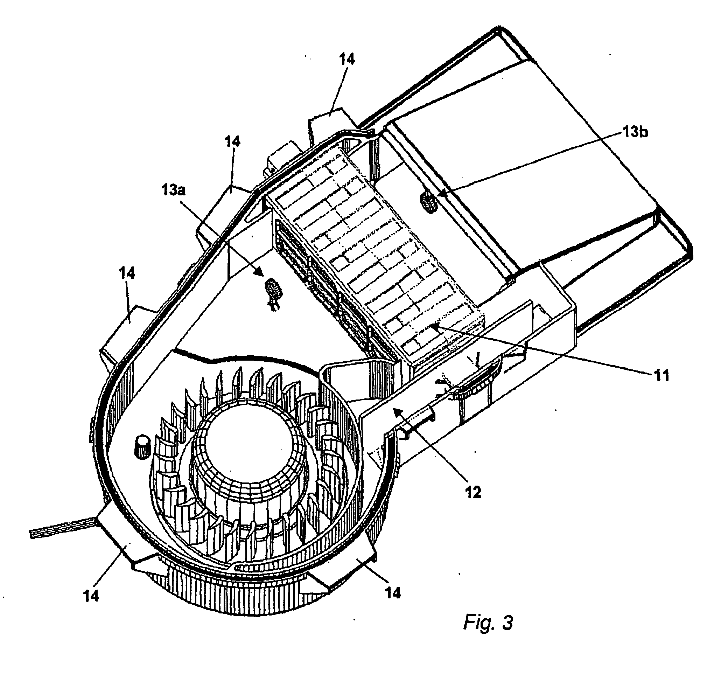

Das Gebläsemodul 8 ist in FIG. 3 näher dargestellt. Er besteht aus einem flachen Kasten von etwa 3 cm Bauhöhe in dem nebeneinander ein Radialgebläse 10, ein vorzugsweise aus PTC-Elementen aufgebautes Heizregister 11, eine auf einer Platine aufgebaute elektrische Steuerung 12 und jeweils ein Temperatursensor 13a bzw. 13b angeordnet sind. Am Außenumfang des Kastens ist eine Anzahl von Befestigungslaschen 14 vorgesehen, die dazu dienen, den Kasten mit entsprechenden Gegenstücken im Stützkörper 3 zu verbinden. Die Temperatursensoren 13a bzw. 13b sind jeweils im Kalt- bzw. Warmlufttrakt vorgesehen und mit der elektronischen Steuerung 12 verbunden. Die elektronische Steuerung 12 ist weiterhin über nicht näher dargestellte Leitungen mit Kraftfahrzeugbordnetz, dem Radialgebläse 10, und entsprechenden vorzugsweise im Sitzbereich angebrachte Steuerelemente verbunden, über die sich die Heizungsstärke und die Gebläsedrehzahl unabhängig voneinander einstellen lassen.

Die elektronische Steuerung 12 arbeitet mit folgendem Funktionsprofil:

### Winterbetrieb - Heizung:

Unmittelbar nach dem Einschalten der Heizung läuft das Radialgebläse 10 über etwa 5 sec langsam auf die eingestellte Nenndrehzahl hoch, um die noch im Sitz befindliche Kaltluft langsam austreten zu lassen. Die gewünschte Heizleistung wird geregelt an das Heizregister abgegeben, wobei die Regelung derart ausgebildet ist, dass darauf Rücksicht genommen wird, dass der Generator nicht überbelastet wird. Es wird also unter Umständen weniger Heizleistung entnommen, als sie der Benutzer anfordert. Die Drehzahl des Radialgebläses 10 ist entweder unabhängig einstellbar oder wenigstens teilweise mit der Heizleistung gekoppelt, wobei bei höheren Heizleistungen auch automatisch die Drehzahl des Radialgebläses 10 erhöht wird.

### Sommerbetrieb - Kühlung:

Im Sommerbetrieb läuft das Radialgebläse 10 zunächst nach dem Einschalten für etwa 3 min auf Saugbetrieb und anschließend auf Blasbetrieb. Das Radialgebläse lässt sich also in zwei Richtungen betreiben, die durch Spannungsumkehr aktivierbar sind. Der Lufteinlass kann für den Sommerbetrieb auch an den Kühlkompressor des Kraftfahrzeugs angeschlossen sein.

Durch die Verwendung eines Radialgebläses 10 ist es gelungen, das Gebläsemodul 8 sehr flach auszubilden, um es sogar in der Rückenlehne unterbringen zu können. Das Radialgebläse 10 saugt die Luft aus einer unmittelbar unter ihm liegenden Öffnung in dem Kasten an, schiebt sie durch an den PTC-Heizelementen entlanggeführte Kanäle in den Ausblastrakt und über eine in dem nicht dargestellten Deckel des Kastens in die Luftströmungskanäle 6, die im Hartschaumstoff der Stützkörper 3 angeordnet sind.

Ist ein Kraftfahrzeug in der ursprünglichen Auslieferung noch nicht, oder noch nicht bei allen Sitzen, mit einem Gebläsemodul l versehen worden und muss es nachgerüstet werden, ist diese Nachrüstung sehr einfach. Zu diesem Zweck braucht man lediglich den Deckel der Kammer 7 abzunehmen, Das Gebläsemodul 8 einzusetzen und an die vorzugsweise ebenfalls schon verlegten Steuer- und Versorgungsleitungen anzuschließen.

## Patentansprüche

1. Kraftfahrzeugsitz mit einem eine im Wesentlichen horizontale Sitzfläche aufweisenden Sitzpolsterteil (1) und einer im wesentlichen senkecht stehenden Rückenlehne (2), bei dem das Sitzpolsterteil und die Rückenlehne eine luftdurchlässige, atmungsaktive, dem aufzunehmenden Körper zugewandten Oberflächenbezug (5) aufweisen, **dadurch gekennzeichnet,**
**dass** unter dem Oberflächenbezug (5) ein Gewirke (4) angeordnet ist, das eine luftdurchlässige Deckschicht (4a), eine Grundschicht (4b) und eine Vielzahl von die beiden Schichten (4a, 4b) verbindenden und auf Abstand haltenden Abstandshalter (4c) aufweist, um die an einer beliebigen Stelle in das Gewirke (4) eingeblasene Luft über die gesamte Fläche möglichst gleichmässig verteilt aus dem Oberflächenbezug (5) austreten zu lassen, wobei das Gewirke (4) aus einem wabenförmigen Nylongeflecht gebildet ist, bei dem die Grundschicht (4b) und die Deckschicht (4a) an ihren Kanten miteinander verbundene Zellen aufweisen und zumindest an den Eckpunkten die Zellen der sich gegenüberliegenden Schichten (4a, 4b) durch die Abstandshalter (4c) miteinender verbunden sind,
**dass** hinter bzw. unter diesem Gewirke (4) ein aus Hartschaumstoff bestehender Stützkörper (3) angeordnet ist, in dem Luftströmungskanäle (6) ausgebildet sind, die eingangsseitig in einer Kammer (7) und ausgangsseitig auf ihren ganzen Längen offen in das Gewirke (4) münden, wobei das Gewirke (4) auf die Oberfläche des Hartschaumstoffs aufgeklebt ist,
und **dass** in dem Stützkörper (3) die Kammer (7) durch eine darin ausgebildete Ausnehmung ausgebildet ist, um in dieser Kammer (7) ein Gebläsemodul (8) aufzunehmen.

2. Kraftfahrzeugsitz nach Anspruch 1, **gekennzeichnet durch** ein Gebläsemodul mit
einer Luftansaugöffnung,
wenigstens einer Ausblasöffnung,
einem Radialgebläse (10), welches eingangsseitig mit der Luftansaugöffnung in Verbindung steht,
einem elektrische Heizwiderstände aufweisenden Heizregister (11),
einer elektronischen Steuerung (12),
jeweils einen im Ansaugtrakt und im Ausblastrakt angeordneten Temperatursensor (13a, 13b), die als Ist-Wertgeber, mit der elektronischen Steuerung (12) verbunden sind,
wobei diese Einheiten baulich in einer Ebene nebeneinander angeordnet sind.

3. Kraftfahrzeugsitz nach Anspruch 1 oder 2, **dadurch gekennzeichnet, dass** wenigstes im Eckbereich des Sitzpolsterteils (1) zur Rückenlehne (2) ein Ausströmer (16) vorgesehen ist, um dort zusätzlich Luft austreten zu lassen.

4. Kraftfahrzeugsitz nach Anspruch 3, **dadurch gekennzeichnet, dass** der Ausströmer (16) mit einem Gitter (17) abgeschlossen ist.

## Claims

1. An automotive vehicle seat comprising a seat cushion part (1) including a substantially horizontal seat surface, and a backrest (2) substantially perpendicular thereto, said seat cushion part and said backrest comprising an air-permeable, breathable surface cover (5) facing the body to be accommodated, **characterized in**
**that** said surface cover (5) has disposed thereunder a knitwear (4) which comprises an air-permeable cover layer (4a), a base layer (4b) and a multitude of spacers (4c) which connect said two layers (4a, 5b) and keep them spaced apart to let the air, which has been blown into said knitwear (4) at a desired location, exit out of said surface cover (5) the air being distributed as uniformly as possible over the whole area, wherein the knitwear (4) is formed of a honeycombed nylon braiding, in which the base layer (4a) and the cover layer (4b) comprise cells which are interconnected at their edges, wherein at least at the corner points of the cells of the opposite layers (4a, 4b) are interconnected by the spacers (4c),
**that** said knitwear (4) has arranged therebehind or thereunder a support body (3) which consists of a rigid foam material and has formed therein air flow channels (6) which at the inlet side terminate in a chamber (7) and at the outlet side into said knitwear (4), said channels being open over their whole lengths, wherein the knitwear (4) is glued to the surface of the rigid foam material,
and **that** in said support body (3) said chamber (7) is formed by a recess formed therein to accommodate a blower module (8) in said chamber (7).

2. An automotive vehicle seat according to claim 1, **characterized by** a blower module comprising:
an air intake opening,
at least one blow-out opening,
a radial blower (10) which at the inlet side communicates with said air intake opening,
a heat register (11) comprising electric heat resistors,
an electronic controller (12),
one temperature sensor each (13a, 13b) arranged in the intake tract and the blow-out tract, respectively, which are connected as actual value sensors to said electronic controller (12),
said units being constructionally arranged side by side in one plane.

3. An automotive vehicle seat according to claim 1 or 2, **characterized in that** an air outlet (16) is provided in the corner portion of the seat cushion part (1) relative to the backrest (2) to let air at that place in addition.

4. An automotive vehicle seat according to claim 3, **characterized in that** said outlet (16) is terminated with a grating (17).

## Revendications

1. Siège de véhicule avec une partie rembourrée d'assise (1) présentant une surface d'assise essentiellement horizontale et un dossier (2) se tenant essentiellement à la verticale, dans lequel la partie rembourrée d'assise et le dossier présentent une garniture de surface (5) laissant passer l'air, respirant, tournée vers le corps à recevoir,
**caractérisé en ce que**, sous la garniture de surface (5), est disposé un maillage (4) qui présente une couche de couverture (4a) laissant passer l'air, une couche de base (4b) et une pluralité d'espaceurs (4c) reliant les deux couches (4a, 4b) et les maintenant espacées, pour laisser sortir l'air soufflé dans le maillage (4) à un endroit souhaité hors de la garniture de surface (5) de manière la plus uniforme possible sur toute la surface,
**en ce que** le maillage (4) se compose d'un tissage en nylon à nid d'abeilles, dans lequel une couche de base (4a) et une couche de couverture (4b) présentent sur leurs arêtes des cellules reliées entre elles, et au moins aux points d'angle, les cellules des couches (4a, 4b) se superposant sont reliées entre elles par les espaceurs (4c),
**en ce qu'**est disposé derrière ou sous ce maillage (4) un corps d'appui (3) composé de mousse en polyuréthane, dans lequel sont conçus des canaux de circulation d'air (6), qui débouchent côté entrée dans une chambre (7) et côté sortie dans le maillage (4) de façon ouverte sur toute leur longueur,
**en ce que** le maillage (4) est collé à la surface de la mousse,
et **en ce que** la chambre (7) est conçue dans le corps d'appui (3) grâce à une excavation formée à l'intérieur pour loger dans cette chambre un module de soufflage (8).

2. Siège de véhicule selon la revendication 1, **caractérisé par** un module de soufflage avec une ouverture d'aspiration d'air, au moins une ouverture de soufflage, un soufflet radial (10), lequel est relié côté entrée avec l'ouverture d'aspiration d'air, un registre chauffant (11) présentant des résistances de chauffage électriques, une commande électronique (12), des capteurs de température (13a, 13b), disposés respectivement dans l'aile d'aspiration et dans l'aile d'expiration, qui sont reliés comme indicateurs de valeur réelle à la commande électronique (12), ces unités étant disposées, quant à leur construction, les unes à côté des autres sur un plan.

3. Siège de véhicule selon la revendication 1 ou 2 **caractérisé en ce qu'**est prévu un écoulement (16) au moins dans la zone d'angle de la partie rembourrée d'assise (1) avec le dossier (2) pour laisser l'air sortir à cet endroit.

4. Siège de véhicule selon la revendication 3 **caractérisé en ce que** l'écoulement (16) est fermé par une grille (17).
